(19) Europäisches Patentamt

European Patent Office

Office européen des brevets

(11) Veröffentlichungsnummer: **0 372 267 B1**

(12) **EUROPÄISCHE PATENTSCHRIFT**

(45) Veröffentlichungstag der Patentschrift: **12.01.94**

(21) Anmeldenummer: **89121087.4**

(22) Anmeldetag: **14.11.89**

Verbunden mit 89912962.1/0445161
(europäische
Anmeldenummer/Veröffentlichungsnummer)
durch Entscheidung vom 23.09.91.

Die Akte enthält technische Angaben, die nach
dem Eingang der Anmeldung eingereicht wurden
und die nicht in dieser Patentschrift enthalten sind.

(51) Int. Cl.⁵: **D21C 5/02**

(54) **Deinken von Altpapieren.**

(30) Priorität: **23.11.88 DE 3839478**

(43) Veröffentlichungstag der Anmeldung:
**13.06.90 Patentblatt 90/24**

(45) Bekanntmachung des Hinweises auf die
Patenterteilung:
**12.01.94 Patentblatt 94/02**

(84) Benannte Vertragsstaaten:
**BE DE LU**

(56) Entgegenhaltungen:
**EP-A- 0 172 684**
**DE-A- 667 722**

(73) Patentinhaber: **Henkel Kommanditgesellschaft auf Aktien**

**D-40191 Düsseldorf(DE)**

(72) Erfinder: **Engelskirchen, Konrad, Dr.**
**Gonellastrasse 24**
**D-4005 Meerbusch 3(DE)**
Erfinder: **Fischer, Herbert, Dr.**
**Am Nettchesfeld 14**
**D-4000 Düsseldorf 13(DE)**
Erfinder: **Hornfeck, Klaus**
**August-Burberg-Strasse 34**
**D-4020 Mettmann(DE)**
Erfinder: **Oberkobusch, Doris, Dr.**
**Seidenweg 43**
**D-4000 Düsseldorf 13(DE)**
Erfinder: **Schieferstein, Ludwig, Dr.**
**Am Hang 15**
**D-4030 Ratingen 1(DE)**

**Beschreibung**

Die Erfindung betrifft ein Verfahren zum Deinken von Altpapieren sowie die Verwendung von mindestens teilweise wasserlöslichen amino- und/oder ammoniumgruppenhaltigen Polymeren mit Zahlenmitteln der Molekulargewichte zwischen 2 000 und 500 000 zum Deinken von mit wasserverdünnbaren Druckfarben bedruckten Altpapieren.

Zur Herstellung von beispielsweise Zeitungsdruck- und Hygienepapieren werden heute in großen Mengen Altpapiere eingesetzt. Für diese Papiersorten bedeuten Helligkeit und Farbe bestimmte Qualitätsmerkmale. Um diese zu erreichen, müssen die Druckfarben aus den bedruckten Altpapieren entfernt werden. Üblicherweise geschieht dies mittels Deinking-Verfahren, die im wesentlichen in 2 Teilschritten ablaufen:

1. Aufschlagen der Altpapiere, d. h. Zerfasern in Wasser bei gleichzeitigem Einwirken der für die Ablösung der Druckfarbenteilchen benötigten Chemikalien und
2. Ausscheidung der abgelösten Druckfarbenteilchen aus der Faserstoffsuspension.

Der 2. Verfahrensschritt kann durch Auswaschen oder Flotation erfolgen (Ullmanns Encyclopädie der technischen Chemie, 4. Auflage, Band 17, Seiten 570 - 571 (1979)). Bei der Flotation, bei der die unterschiedliche Benetzbarkeit von Druckfarben und Papierfasern ausgenutzt wird, wird Luft durch die Faserstoffsuspensionen gedrückt oder gesaugt. Dabei verbinden sich kleine Luftbläschen mit den Durckfarbenteilchen und bilden an der Wasseroberfläche einen Schaum, der mit Stoffängern entfernt wird.

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen, die das Ablösen und Trennen der Druckfarben bewirken, werden häufig Seifen und/oder Fettalkoholpolyglykolether eingesetzt (Ullmanns Encyclopädie der technischen Chemie, 4. Auflage, Band 17, Seiten 571-572 (1979)).

Aus der DE-A-15 17 148 ist bekannt, daß sich in Gegenwart von Proteinen mit Molekulargewichten von beispielsweise 10 000 oder mit Polyvinylpyrrolidonen Druckfarben auf der Basis von Petroleumölen aus Altpapieren entfernen lassen. In den DE-A-33 22 330 und DE-A-33 47 906 wird die Verwendung von Alkylaminopolyethern zur Entfernung von Druckerschwärze beschrieben. Des weiteren sind aus JP-A-84/137 587, referiert in Chem. Abstr. 102, 80638b (1985) Ethylenimin-Ethylenoxidpropylenoxid-Copolymere und aus JP-A-82/25489, referiert in Chem. Abstr. 97, 57393n (1982) Ethylenoxid-Propylenoxid-Alkyl-(alkenyl)amin-Addukte als Deinkingchemikalien bekannt.

Schließlich aus EP-A-172 684 ein Verfahren zum Deinken von bedrucktem Altpapier bekannt, das in Gegenwart von hydrolysierten Copolymeren von Dimethyldiallylammoniumchlorid und Acrylamid durchgeführt wird. Gemäß der Lehre der EP-A-172 684 sind dabei diejenigen Copolymeren als Deinking-Chemikalien bevorzugt, deren Molgewicht im Bereich von 2.000.000 bis 10.000.000 liegt.

Die klassischen Druckfarbensysteme, beispielsweise auf Basis Nitrocellulose, Maleinatharze und/oder Schellack, die Ester und/oder Ketone, beispielsweise Ethylacetat und/oder Methylethylketon, oder Alkohole als Lösungsmittel enthalten, werden in den letzten Jahren aus Umweltschutzgründen in zunehmendem Maße durch wasserverdünnbare Druckfarben ersetzt. Ein weiterer Grund für die zunehmende Verwendung wasserverdünnbarer Druckfarben liegt in der Unbrennbarkeit von Wasser, wodurch in den Druckereien die bei Verwendung lösungsmittelhaltiger Druckfarben notwendige Installation aufwendiger Schutzeinrichtungen überflüssig wird. Die meisten wasserverdünnbaren Druckfarben enthalten als Bindemittel anionische Polymere, beispielsweise carboxylgruppenhaltige Polymere, durch deren Neutralisation mit Basen die Druckfarben wasserverdünnbar werden.

Wasserverdünnbare Druckfarben haben jedoch den entscheidenden Nachteil, daß sie mit den üblichen in der Deinking-Flotte enthaltenen Tensiden - wenn überhaupt - nur völlig unzureichend entfernt werden können (Wochenblatt für Papierfabrikation 13, 537-538 (1988)). Das hat zur Folge, daß bis heute die in immer größeren Mengen anfallenden Altpapiere, die mit wasserverdünnbaren Druckfarben bedruckt wurden, nicht wiederverwertet werden und somit auch nicht als Altpapierrohstoff für Zeitungsdruck- und Hygienepapiere zur Verfügung stehen.

Die Aufgabe der Erfindung bestand somit in der Entwicklung eines Deinking-Verfahrens, mit dem es möglich ist, Altpapiere, die mit wasserverdünnbaren Druckfarben bedruckte Altpapierbestandteile enthalten, zu deinken.

Überraschenderweise wurde gefunden, daß Altpapiere, die mit wasserverdünnbaren Drückfarben bedrückte Altpapierbestandteile enthalten dadürch güt deinkt werden können, daß man die Wasch-Deinking- oder Flotation-Deinking-Verfahren in Gegenwart von mindestens teilweise wasserlöslichen amino- und/oder ammoniumgruppenhaltigen Polymeren und/oder Copolymeren

Gegenstand der Erfindung ist dementsprechend ein Verfahren zum Deinken von bedrückten Altpapieren in Gegenwart von mindestens teilweise Wasserlöslichen Polymeren durch Aufschlagen in Wasser und anschließende Druckfarbenteilchenentfernung durch Flotation oder Auswaschen, dadurch gekennzeichnet, daß Altpapiere, die mit wasserverdünnbaren Drückfarben bedrückte Altpapierbestandteile enthalten, in Gegenwart von amino- und/oder ammoniumgruppenhaltigen Polymeren und/oder Copolymeren mit Zahlenmitteln der mittleren Molekulargewichte zwischen 2 000 und 500 000 aufgeschlagen werden.

Weiterer Erfindungsgegenstand ist die Verwendung von mindestens teilweise wasserlöslichen amino- und/oder ammoniumgruppenhaltigen Polymeren und/oder Copolymeren mit Zahlenmitteln der Molekulargewichte zwischen 2 000 und 500 000 zum Deinken von Altpapieren, die mit wasserverdünnbaren Druckfarben bedruckte Altpapierbestandteile enthalten.

Vorzugsweise kommen mindestens teilweise wasserlösliche amino- und/oder ammoniumgruppenhaltige Polymere und/oder Copolymere mit Zahlenmitteln der Molekulargewichte zwischen 5 000 und 200 000, besonders bevorzugt solche mit Zahlenmitteln der Molekulargewichte zwischen 10 000 und 100 000 zum Einsatz.

"Mindestens teilweise wasserlöslich" bedeutet, daß die Polymeren und/oder Copolymeren beim Anwendungs-pH-Wert zu mehr als 0,01 Gew.-% in Wasser klar oder trübe löslich sind.

Der Begriff "mindestens teilweise wasserlösliche aminogruppenhaltige Polymere und/oder Copolymere" umfaßt auch Polymere mit Pyridingruppen, beispielsweise Polymere auf Basis von 2-Vinylpyridin und/oder 4-Vinylpyridin.

Eine für das erfindungsgemäße Verfahren besonders bevorzugte Polymerengruppe sind Polyethylenimine und/oder ethyleniminhaltige Copolymere. Diese können gewünschtenfalls zusammen mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 eingesetzt werden.

Zum Deinken von Altpapieren sind ferner Polymere und/oder Copolymere auf der Basis von 2-Vinylpyridin, 4-Vinylpyridin und/oder 1-Vinylimidazol, beispielsweise Poly-4-vinylpyridin, Copolymere aus 1-Vinylimidazol und N-Vinylpyrrolidon mit Vinylimidazolgehalten zwischen 10 und 90 Gew.-%, gegebenenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 besonders geeignet. Die Herstellung dieser Polymeren und/oder Copolymeren wird nach an sich bekannten Polymerisationsverfahren beispielsweise in Substanz in Gegenwart radikalbildender Substanzen durchgeführt (Ullmans Encyclopädie der technischen Chemie, 4. Auflage, Band 23, Seiten 611 - 614, Verlag Chemie Weinheim 1983).

Primäre, sekundäre, tertiäre und/oder quaternierte aminogruppenhaltige Polysaccharide und/oder Heteropolysaccharide und/oder deren Derivate, die gegebenenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 eingesetzt werden können, sind eine weitere besonders bevorzugte Polymerengruppe für das erfindungsgemäße Deinking-Verfahren. Mindestens teilweise wasserlösliche primäre, sekundäre, tertiäre und/oder quaternierte aminogruppenhaltige Cellulosen, Hydroxyethylcellulosen, Stärken, Chitosan und/oder Guar sind Beispiele für primäre, sekundäre, tertiäre und/oder quaternierte aminogruppenhaltige Polysaccharide und/oder Heteropolysaccharide. Die Einführung tertiärer und/oder quaternierter Aminogruppen in aminogruppenfreie Polysaccharide und/oder Heteropolysaccharide erfolgt in an sich bekannter Weise, indem Polysaccharide und/oder Heteropolysaccharide mit tertiären Aminen, die einen Glycidylrest enthalten, und/oder mit Ammoniumverbindungen umgesetzt werden (US 3 472 840). Dimethylglycidylamin und 3-Chlor-2-hydroxypropyltrimethylammoniumchlorid sind Beispiele für tertiäre Amine und Ammoniumverbindungen.

Wasserverdünnbare Druckfarben lassen sich weiterhin besonders gut in Gegenwart von Proteinen, gegebenenfalls in Kombination mit weiteren mindestens teilweise wasserlöslichen amino- und/oder ammoniumgruppenhaltigen Polymeren und/oder Copolymeren mit Zahlenmittel der Molekulargewichte zwischen 2 000 und 500 000 aus Altpapieren entfernen.

In Gegenwart der o. g. Polymeren und/oder Copolymeren lassen sich wasserverdünnbare Druckfarben, beispielsweise wasserverdünnbare Flexodruckfarben aus bedruckten Altpapieren, beispielsweise Zeitungen, Illustrierten, Computerpapieren, Zeitschriften, Broschüren, Formularen, Telefonbüchern und/oder Katalogen entfernen. Die erhaltenen deinkten Altpapiere zeichnen sich durch sehr hohe Weißgrade aus.

Die zu deinkenden Altpapiere werden in einem Stofflöser in einer wässrigen Lösung, die typischerweise 0,5 bis 1,0 Gew.-% 100%iges Wasserstoffperoxid, 0,5 bis 2,5 Gew.-% 100%iges NaOH, 2,0 bis 4,0 Gew.-% Wasserglas, 35 Gew.-%ig (37 - 40 °Bé) und 0,01 bis 1 Gew-% Aktivsubstanz mindestens teilweise wasserlösliche amino- und/oder ammoniumgruppenhaltige Polymere und/oder Copolymere - alle Gew.-%-Angaben beziehen sich auf lufttrockenes Altpapier - enthält, bei Temperaturen zwischen 20 und 60 °C aufgeschlagen. Um gute Deinking-Ergebnisse zu bekommen, werden pro 100 g lufttrockenem Altpapier 0.01

3

bis 1 g Aktivsubstanz erfindungsgemäße Polymere und/oder Copolymere eingesetzt. Nach einer Verweilzeit zwischen 60 und 120 Minuten bei Temperaturen zwischen 20 und 60 °C werden die Faserstoffsuspensionen in Wasser eingerührt, so daß 0,6 bis 1,6 Gew.-%ige Stoffsuspensionen erhalten werden. Anschließend wird vorzugsweise in an sich bekannter Weise, beispielsweise in einer Denver-Flotationszelle flotiert.

Beispiele

Anwendungsbeispiele

98 g lutro ( = 90 g atro bei 8 % Feuchte) bedrucktes Altpapier (lutro = lufttrocken, atro = absolut trocken) aus 100 % Zeitungen, bedruckt mit wasserverdünnbaren Flexodruckfarben, wurde bei 3,5 Gew.-% Stoffdichte im Laborpulper mit wäßrigen Lösungen, bestehend aus
2 Gew.-% Natronwasserglas, 37 - 40 °Bé
1 Gew.-% Natriumhydroxid (100 %ig)
0,7 Gew.-% Wasserstoffperoxid (100 Gew.-%ig)
0,4 Gew.-% Tensid oder 0,2 Gew.-% erfindungsgemäßes Polymer oder Copolymer
bei 45 °C mittels Dispergierscheibe (3 000 Umdrehungen pro Minute) aufgeschlagen und nach 1 3/4 Stunde bei 45 °C auf 1 Gew.-% verdünnt, indem die Faserstoffsuspensionen in Wasser eingerührt wurden. Anschließend wurden die Faserstoffsuspensionen bei 45 °C in einer Denver-Flotationszelle bei 1 900 Umdrehungen pro Minute innerhalb von 15 Minuten flotiert.

Die Deinking-Ergebnisse des in Gegenwart unterschiedlicher Polymerer und Copolymerer sowie in Gegenwart von Tensiden erhaltenen deinkten Altpapiers sind in Tabelle 1 zusammengefaßt. Die Deinkbarkeitsmaßzahl (DEM) wurde aus den Reflexionsfaktoren $R_{457nm}$ (Weißgrad) der bedruckten (BS), deinkten (DS) und unbedruckten (US) Papierstoffe noch folgender Formel errechnet:

$$\text{DEM (\%)} = \frac{\text{Weißgrad (DS)} - \text{Weißgrad (BS)}}{\text{Weißgrad (US)} - \text{Weißgrad (BS)}} \times 100$$

(0 % bedeutet keine Druckfarbenentfernung, 100 % bedeutet quantitative Druckfarbenentfernung).

Tabelle 1

| eingesetztes Polymer | $R_{457}$ (BS) | $R_{457}$ (DS) | $R_{457}$ (US) | DEM (%) | Aussehen des Kreislaufswassers |
|---|---|---|---|---|---|
| Superfloc[R]C577[1]) | 36,3 | 47,8 | 56,4 | 57 | klar |
| Polymer JR 400[2]) | 36,3 | 49,9 | 56,3 | 68 | klar |
| zum Vergleich Fettsäure[3]) | 36,3 | 35,6 | 56,3 | 0 | schwarz |

1) neutralisiertes Polyethylenimin - 50 Gew.-%ige wäßrige Lösung, mittleres Molekulargewicht (MG) = 100 000, Brookfield-Viskosität (25 °C, 20 Umdrehungen pro Minute): 300 mPas; Hersteller: Cyanamid (USA)
2) quaternierte Hydroxyethylcellulose - Quaternierungsmittel: 3-Chlor-2-hydroxypropyltrimethylammoniumchlorid, Quaternierungsgrad: 0,4/Anhydroglucoseeinheit; Aktivsubstanzgehalt: 95 %; Hersteller: Union Carbide
3) Olinor[R] 4010, Henkel KGaA

**Patentansprüche**

1. Verfahren zum Deinken von bedruckten Altpapieren in Gegenwart von mindestens teilweise wasserlöslichen Polymeren durch Aufschlagen in Wasser und anschließende Druckfarbenteilchenentfernung durch Flotation oder Auswaschen, dadurch gekennzeichnet, daß Altpapiere, die mit wasserverdünnbaren Druckfarben bedruckte Altpapierbestandteile enthalten, in Gegenwart von amino- und/oder ammoniumgruppenhaltigen Polymeren und/oder Copolymeren mit Zahlenmitteln der mittleren Molekulargewichte zwischen 2 000 und 500 000 aufgeschlagen werden.

2. Verfahren nach Anspruch 1, dadurch gekennzeichnet, daß Altpapiere, die mit wasserverdünnbaren Druckfarben bedruckte Altpapierbestandteile enthalten, in Gegenwart von mindestens teilweise wasserlöslichen amino- und/oder ammoniumgruppenhaltigen Polymeren und/oder Copolymeren mit Zahlenmitteln der Molekulargewichte zwischen 5 000 und 200 000, vorzugsweise zwischen 10 000 und 100 000, aufgeschlagen werden.

3. Verfahren nach einem oder beiden der Ansprüche 1 bis 2, dadurch gekennzeichnet, daß Altpapiere, die mit wasserverdünnbaren Druckfarben bedruckte Altpapierbestandteile enthalten, in Gegenwart von Polyethyleniminen und/oder ethyleniminhaltigen Copolymeren, gewünschtenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 aufgeschlagen werden.

4. Verfahren nach einem oder mehreren der Ansprüche 1 bis 2, dadurch gekennzeichnet, daß Altpapiere, die mit wasserverdünnbaren Druckfarben bedruckte Altpapierbestandteile enthalten, in Gegenwart von Polymeren und/oder Copolymeren auf Basis von 2-Vinylpyridin, 4-Vinylpyridin und/oder 1-Vinylimidazol, gewünschtenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 aufgeschlagen werden.

5. Verfahren nach einem oder beiden der Ansprüche 1 bis 2, dadurch gekennzeichnet, daß Altpapiere, die mit wasserverdünnbaren Druckfarben bedruckte Altpapierbestandteile enthalten, in Gegenwart von primäre, sekundäre, tertiäre und/oder quaternierte Aminogruppen enthaltenen Polysacchariden und/oder Heteropolysacchariden, gewünschtenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 aufgeschlagen werden.

6. Verfahren nach einem oder beiden der Ansprüche 1 bis 2, dadurch gekennzeichnet, daß Altpapiere, die mit wasserverdünnbaren Druckfarben bedruckte Altpapierbestandteile enthalten, in Gegenwart von Proteinen, gewünschtenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 aufgeschlagen werden.

7. Verwendung von mindestens teilweise wasserlöslichen amino-und/oder ammoniumgruppenhaltigen Polymeren und/oder Copolymeren mit Zahlenmitteln der Molekulargewichte zwischen 2 000 und 500 000 zum Deinken von Altpapieren, die mit wasserverdünnbaren Druckfarben bedruckte Altpapierbestandteile enthalten.

8. Verwendung nach Anspruch 7, dadurch gekennzeichnet, daß mindestens teilweise wasserlösliche amino- und/oder ammoniumgruppenhaltige Polymere und/oder Copolymere mit Zahlenmitteln der Molekulargewichte zwischen 5 000 und 200 000, vorzugsweise zwischen 10 000 und 100 000, verwendet werden.

9. Verwendung nach einem oder beiden der Ansprüche 7 bis 8, dadurch gekennzeichnet, daß Polyethylenimine und/oder ethyleniminhaltige Copolymere, gewünschtenfalls in Kombination mit weiteren mindestens teilweise wasserlöslichen amino-und/oder ammoniumgruppenhaltigen Polymeren und/oder Copolymeren mit Zahlenmitteln der Molekulargewichte zwischen 2 000 und 500 000 verwendet werden.

10. Verwendung nach einem oder mehreren der Ansprüche 7 bis 8, dadurch gekennzeichnet, daß Polymere und/oder Copolymere auf Basis von 2-Vinylpyridin, 4-Vinylpyridin und/oder 1-Vinylimidazol, gewünschtenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 verwendet werden.

11. Verwendung nach einem oder beiden der Ansprüche 7 bis 8, dadurch gekennzeichnet, daß primäre, sekundäre, tertiäre und/oder quaternierte aminogruppenhaltige Polysaccharide und/oder Heteropolysaccharide, gewünschtenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 verwendet werden.

12. Verwendung nach einem oder beiden der Ansprüche 7 bis 8, dadurch gekennzeichnet, daß Proteine, gewünschtenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2 000 und 500 000 verwendet werden.

## Claims

1. A process for deinking printed wastepaper in the presence of at least partly water-soluble polymers by disintegration in water and subsequent removal of printing particles by flotation or washing, characterized in that wastepaper containing wastepaper constituents printed with water-dilutable printing inks is disintegrated in the presence of polymers and/or copolymers containing amino and/or ammonium groups and having number average molecular weights in the range from 2,000 to 500,000.

2. A process as claimed in claim 1, characterized in that wastepaper containing wastepaper constituents printed with water-dilutable printing inks is disintegrated in the presence of at least partly water-soluble polymers and/or copolymers containing amino and/or ammonium groups and having number average molecular weights in the range from 5,000 to 200,000 and preferably in the range from 10,000 to 100,000.

3. A process as claimed in one or both of claims 1 to 2, characterized in that wastepaper containing wastepaper constituents printed with water-dilutable printing inks is disintegrated in the presence of polyethyleneimines and/or copolymers containing ethyleneimines, if desired in combination with other at least partly water-soluble polymers and/or copolymers containing amino and/or ammonium groups and having number average molecular weights in the range from 2,000 to 500,000.

4. A process as claimed in one or more of claims 1 to 2, characterized in that wastepaper containing wastepaper constituents printed with water-dilutable printing inks is disintegrated in the presence of polymers and/or copolymers based on 2-vinyl pyridine, 4-vinyl pyridine and/or 1-vinyl imidazole, if desired in combination with other at least partly water-soluble polymers and/or copolymers containing amino and/or ammonium groups and having number average molecular weights in the range from 2,000 to 500,000.

5. A process as claimed in one or both of claims 1 to 2, characterized in that wastepaper containing wastepaper constituents printed with water-dilutable printing inks is disintegrated in the presence of polysaccharides and/or heteropolysaccharides containing primary, secondary, tertiary and/or quaternary ammonium groups, if desired in combination with other at least partly water-soluble polymers and/or copolymers containing amino and/or ammonium groups and having number average molecular weights in the range from 2,000 to 500,000.

6. A process as claimed in one or both of claims 1 to 2, characterized in that wastepaper containing wastepaper constituents printed with water-dilutable printing inks is disintegrated in the presence of proteins, if desired in combination with other at least partly water-soluble polymers and/or copolymers containing amino and/or ammonium groups and having number average molecular weights in the range from 2,000 to 500,000.

7. The use of at least partly water-soluble polymers and/or copolymers containing amino and/or ammonium groups and having number average molecular weights in the range from 2,000 to 500,000 for deinking wastepaper printed with water-dilutable printing inks.

8. The use claimed in claim 7, characterized in that at least partly water-soluble polymers and/or copolymers containing amino and/or ammonium groups and having number average molecular weights in the range from 5,000 to 200,000 and preferably in the range from 10,000 to 100,000 are used.

9. The use claimed in one or both of claims 7 to 8, characterized in that polyethyleneimines and/or copolymers containing ethyleneimines are used, if desired in combination with other at least partly water-soluble polymers and/or copolymers containing amino and/or ammonium groups and having number average molecular weights in the range from 2,000 to 500,000.

10. The use claimed in one or more of claims 7 to 8, characterized in that polymers and/or copolymers based on 2-vinyl pyridine, 4-vinyl pyridine and/or 1-vinyl imidazole are used, if desired in combination with other at least partly water-soluble polymers and/or copolymers containing amino and/or ammonium groups and having number average molecular weights in the range from 2,000 to 500,000.

11. The use claimed in one or both of claims 7 to 8, characterized in that polysaccharides and/or heteropolysaccharides containing primary, secondary, tertiary and/or quaternary amino groups are used, if desired in combination with other at least partly water-soluble polymers and/or copolymers containing amino and/or ammonium groups and having number average molecular weights in the range from 2,000 to 500,000.

12. The use claimed in one or both of claims 7 to 8, characterized in that proteins are used, if desired in combination with other at least partly water-soluble polymers and/or copolymers containing amino and/or ammonium groups and having number average molecular weights in the range from 2,000 to 500,000.

**Revendications**

1. Procédé de désencrage de vieux papiers imprimés en présence de polymères au moins partiellement hydrosolubles par dispersion dans l'eau et ensuite élimination des particules d'encre par flottation ou lavage, caractérisé en ce qu'on traite les vieux papiers qui contiennent des fractions de vieux papiers imprimés avec des encres diluables dans l'eau en présence de polymères et/ou de copolymères contenant des groupes amino et/ou des groupes ammonium avec des moyennes en nombre de poids moléculaires moyens comprises entre 2000 et 500 000.

2. Procédé selon la revendication 1, caractérisé en ce qu'on traite des vieux papiers qui contiennent des fractions de vieux papiers imprimés avec des encres diluables à l'eau, en présence de polymères et/ou de copolymères contenant des groupes amino et/ou des groupes ammonium au moins partiellement hydrosolubles avec des moyennes en nombre de poids moléculaires comprises entre 5 000 et 200 000, de préférence entre 10 000 et 100 000.

3. Procédé selon l'une ou les deux revendications 1 et 2, caractérisé en ce qu'on traite des vieux papiers qui contiennent des fractions de vieux papiers imprimés avec des encres diluables à l'eau, en présence de polyéthylèneimines et/ou de copolymères contenant de l'éthylèneimine, de manière appropriée en combinaison avec d'autres polymères et/ou copolymères au moins partiellement hydrosolubles contenant des groupes amino et/ou des groupes ammonium avec des moyennes en nombre de poids moléculaires comprises entre 2 000 et 500 000.

4. Procédé selon l'une ou plusieurs des revendications 1 et 2, caractérisé en ce qu'on traite des vieux papiers qui contiennent des fractions de vieux papiers imprimés avec des encres diluables à l'eau, en présence de polymères et/ou de copolymères à base de 2-vinylpyridine, 4-vinylpyridine et/ou 1-vinylimidazol, de préférence en combinaison avec d'autres polymères et/ou copolymères au moins partiellement hydrosolubles contenant des groupes amino et/ou des groupes ammonium avec des moyennes en nombre de poids moléculaires comprises entre 2 000 et 500 000.

5. Procédé selon l'une ou les deux revendications 1 et 2, caractérisé en ce qu'on traite des vieux papiers qui contiennent des fractions de vieux papiers imprimés avec des encres diluables à l'eau en présence de polysaccharides et/ou d'hétéropolysaccharides contenant des groupes amino primaires, secondaires, tertiaires et/ou quaternaires, de préférence en combinaison avec d'autres polymères et/ou copolymères au moins partiellement hydrosolubles contenant des groupes amino et/ou des groupes ammonium avec des moyennes en nombre de poids moléculaires comprises entre 2 000 et 500 000.

**6.** Procédé selon l'une ou les deux revendications 1 et 2, caractérisé en ce qu'on traite des vieux papiers qui contiennent des fractions de vieux papiers imprimés, avec des encres diluables à l'eau en présence de protéines, de préférence en combinaison avec d'autres polymères et/ou copolymères au moins partiellement hydrosolubles contenant des groupes amino et/ou des groupes d'ammonium avec des moyennes en nombre de poids moléculaires comprises entre 2 000 et 500 000.

**7.** Utilisation de polymères et/ou copolymères au moins partiellement hydrosolubles contenant des groupes amino et/ou des groupes ammonium, avec des moyennes en nombre de poids moléculaires comprises entre 2 000 et 500 000 pour désencrer des vieux papiers, qui contiennent des fractions de vieux papiers imprimés avec des encres diluables à l'eau.

**8.** Utilisation selon la revendication 7, caractérisée en ce qu'on utilise des polymères et/ou des copolymères au moins partiellement hydrosolubles contenant des groupes amino et/ou des groupes ammonium avec des moyennes en nombre de poids moléculaire comprises entre 5 000 et 200 000, de préférence entre 10 000 et 100 000.

**9.** Utilisation selon l'une ou les deux revendications 7 et 8, caractérisée en ce qu'on utilise des polyéthylèneimines et/ou des copolymères contenant de l'éthylèneimine, de préférence en combinaison avec d'autres polymères et/ou copolymères au moins partiellement hydrosolubles contenant des groupes amino et/ou des groupes ammonium avec des moyennes en nombre de poids moléculaires comprises entre 2 000 et 500 000.

**10.** Utilisation selon l'une ou plusieurs des revendications 7 et 8, caractérisée en ce qu'on utilise des polymères et/ou des copolymères à base de 2-vinylpyridine, 4-vinylpyridine et/ou 1-vinylimidazol, de préférence en combinaison avec d'autres polymères et/ou copolymères au moins partiellement hydrosolubles contenant des groupes amino et/ou des groupes ammonium avec des moyennes en nombre de poids molécuaire comprises entre 2 000 et 500 000.

**11.** Utilisation selon l'une ou les deux revendications 7 à 8, caractérisée en ce qu'on utilise des polysaccharides et/ou hétéropolysaccharides contenant des groupes amino primaires, secondaires, tertiaires et/ou quaternaires, de préférence en combinaison avec d'autres polymères et/ou copolymères au moins partiellement hydrosolubles contenant des groupes amino et/ou des groupes ammonium avec des moyennes en nombre de poids moléculaire comprises entre 2 000 et 500 000.

**12.** Utilisation selon l'une ou les deux revendications 7 et 8, caractérisé en ce qu'on utilise des protéines, de préférence en combinaison avec d'autres polymères et/ou copolymères partiellement hydrosolubles contenant des groupes amino et/ou des groupes ammonium avec des moyennes en nombre de poids moléculaires comprises entre 2 000 et 500 000.